# EUROPÄISCHE PATENTSCHRIFT

(11) **EP 0 417 241 B1**
(45) Veröffentlichungstag und Bekanntmachung des Hinweises auf die Patenterteilung: **01.06.1994**
(21) Anmeldenummer: 90905163.3
(22) Anmeldetag: 28.03.1990
(51) Int. Cl.: B60S 1/04

(54) **SCHEIBENWISCHERANLAGE**
WINDSCREEN WIPER SYSTEM
ESSUIE-GLACE

(30) Priorität: 29.03.1989 AT 717/89
(43) Veröffentlichungstag der Anmeldung: 20.03.1991
(60) Teilanmeldung: 93112687.4
(73) Patentinhaber: BATTLOGG, Stefan, A-6771 St. Anton im Montafon (AT)
(72) Erfinder: BATTLOGG, Stefan, A-6771 St. Anton im Montafon (AT)
(74) Vertreter: Torggler, Paul, Dr.
(86) Internationale Anmeldenummer: AT9000023
(87) Internationale Veröffentlichungsnummer: WO9011209

(56) Entgegenhaltungen:
- DE-A- 3 315 126
- FR-A- 2 230 523
- US-A- 2 607 065
- US-A- 2 624 904
- US-A- 2 790 195
- US-A- 3 688 334
- US-A- 4 447 928

## Beschreibung

Die Erfindung betrifft eine Scheibenwischeranlage, insbesondere für Personenkraftwagen, mit einem um eine Schwenkachse schwenkbaren Wischerarm, der ein Lagergehäuse und am freien Endteil ein Drehlager für ein im wesentlichen parallel über die Scheibe führbares Wischerblatt aufweist, das sowohl in einer mittleren Arbeitsstellung als auch in einer in den Bereich des unteren Scheibenrandes verschwenkten Ruhestellung annähernd parallel zum Wischerarm liegt, mit einem mit Abstand zur Schwenkachse an einem Gelenksbolzen des Lagergehäuses angreifenden, fahrzeugfesten Schwenkantrieb für den Wischerarm, mit einem im Lagergehäuse angeordneten Steuergetriebe für den Drehantrieb des Wischerblattes während der Parallelführung, wobei das Steuergetriebe ein während der Parallelführung auf einer Lagerachse fahrzeugfest angeordnetes Steuerelement sowie ein mit dem Wischerarm schwenkendes Abtastelement aufweist, und wobei die Lagerachse mit Abstand parallel zur Schwenkachse liegt, und mit einer Einrichtung zum Wechsel zwischen paralleler und schwenkender Führung des Wischerblattes, die einen Stellantrieb aufweist, mittels dem das Steuerelement in der mittleren Arbeitsstellung aus der fahrzeugfesten Anordnung in eine wischerarmfeste Anordnung überführbar ist, in der das Steuergetriebe außer Funktion gesetzt, der Drehantrieb des Wischerblattes arretiert und der Schwenkwinkel des Wischerarmes verändert ist.

Eine derartige Scheibenwischeranlage ist beispielsweise der US-A-3,688,334 zu entnehmen. Die Umschaltung des Steuerelementes erfolgt bei diesem Scheibenwischer dadurch, daß ein mittels des Stellantriebes verschiebbarer Riegel einen Mitnehmer entweder mit einem fahrzeugfesten Teil oder mit einem beweglichen Teil verbindet, der ein Lagergehäuse des Steuergetriebes bildet und an dem der Schwenkantrieb angreift. Die Schwenkachse des Wischerarmes liegt parallel zur Lagerachse auf dem um die Achse verschwenkbaren Lagergehäuse. Das Steuergetriebe umfaßt vier Zahnräder, die paarweise mittels zweier Zahnriemen verbunden sind. Solange der Mitnehmer, die Lagerachse und die darauf angeordneten Zahnräder fahrzeugfest gehalten sind, verschwenkt der Wischerarm entgegengesetzt zum Lagergehäuse, wobei sein Schwenkwinkel aufgrund einer Übersetzung im Getriebebereich größer als der Schwenkwinkel des Lagergehäuses ist. Wird der Mitnehmer wischerarmfest fixiert, entspricht der Schwenkwinkel des Wischerarmes dem des Lagergehäuses und der Wischerarm schwenkt mit diesem mit.

Die US-A 2,607,065 zeigt einen Scheibenwischer mit einem zweiteiligen, längenveränderbaren Wischerarm, in dem ein Stellantrieb einen Bowdenzug enthält, über den ein Hebel verschwenkt wird, der eine Feder vorspannt. Der Schwenkantrieb wird stillgesetzt, wenn eine mittlere Arbeitsstellung erreicht ist, in der die gespannte Feder den vorderen Teil des Wischerarmes um ein Gelenk in die Parkstellung verschwenkt, das in dieser Stellung in der Schwenkachse liegt. Das Verschieben in die Parkstellung spannt eine gegenwirkende Feder, sodaß beim Einschalten nach Verschwenken des Hebels vor dem Einsetzen des Schwenkantriebes der vordere Teil des Wischerarmes in die mittlere Arbeitsstellung schwenken soll. Das Steuergetriebe enthält für beide Betriebsarten je ein fahrzeugfestes Steuerelement.

Die Erfindung hat es sich nun zur Aufgae gestellt, bei einer Scheibenwischeranlage, deren Wischerblatt parallel über die gesamte Scheibe geführt und etwa parallel zum Wischerarm mit diesem an den unteren Scheibenrand verschwenkt werden kann, ein möglichst einfaches Steuergetriebe auszubilden. Zusätzlich soll die Scheibenwischeranlage auch mit längenveränderbaren Wischerarmen ausrüstbar sein.

Erfindungsgemäß wird dies dadurch erreicht, daß die Schwenkachse des Wischerarmes auf dem Steuerelement angeordnet ist und daß das Lagergehäuse während der Parallelführung des Wischerblattes um die auf dem Steuerelement angeordnete Schwenkachse und während der Überführung in die Ruhestellung gemeinsam mit dem Steuerelement um die Lagerachse schwenkbar ist, wobei der Abstand des Gelenksbolzens zur Lagerachse kleiner als der Abstand des Gelenksbolzens zur Schwenkachse ist.

Bei der Ausführung wird der unterschiedliche Schwenkwinkel nicht durch einen Untersetzungswechsel im Steuergetriebe erzielt, sondern er ergibt sich aufgrund der unterschiedlichen Abstände des Gelenkzapfens zur Lagerachse und zur Schwenkachse aus der aus der Umschaltung resultierenden Änderung der Hebelarmlänge.

Für die Verlängerung des schwenkenden Wischerarmes ist in einer bevorzugten Ausführung vorgesehen, daß der Wischerarm einen mit dem Lagergehäuse verbundenen ersten Teil und einen während der Parallelführung des Wischerblattes im ersten Teil teleskopisch verschiebbaren zweiten Teil aufweist, an dem das Drehlager für das Wischerblatt vorgesehen ist, und daß die Verschiebung des zweiten Teiles ebenfalls von dem den Drehantrieb des Wischerblattes steuernden Steuergetriebe gesteuert und in der wischerarmfesten Anordnung des Steuerelementes blockiert ist. Dadurch sind, wenn das Steuerelement wischerarmfest fixiert ist, sowohl die Verdrehung des Wischerblattes als auch die Verschiebung des zweiten Wischerarmteiles blockiert.

Wenn der Stellantrieb eine Verriegelungseinrichtung beaufschlagt, die einen in eine Öffnung eines fahrzeugfesten Bauteiles oder eine Öffnung des Lagergehäuses einschiebbaren Sperrstift aufweist, so ist bevorzugt vorgesehen, daß der Sperrstift parallel zur Lagerachse verschiebbar ist.

Einarmwischer benötigen infolge des großen Gesamtschwenkwin-kels eine höhere Wischergeschwindigkeit, um im Vergleich zu Scheibenwischerpaaren eine gleiche Wischfrequenz zu erzielen. Die höhere Wischerblattgeschwindigkeit kann dabei vor allem bei hohen Fahrgeschwindigkeiten die Wischqualität ungünstig beeinflussen, sodaß die Sicht durch Schlierenbildung, Abheben aufgrund vom Wischergummiaquaplaning oder dergleichen beeinträchtigt ist. Wird eine erfindungsgemäße einarmige Scheiben-wischeranlage außermittig in der fahrerseitigen Hälfte der Windschutzscheibe angeordnet, so kann in dieser Hälfte die Wischerblattgeschwindigkeit verringert werden. Auch eine mittige Anordnung kann zu einer Asymmetrie führen, wenn der Angriffspunkt des Schwenkantriebes schräg zur Längs-achse des Wischerarmes verschoben wird. Das verlangsamte Wischerblatt überstreicht dann die fahrerseitige Scheibenhälfte vollflächig, während auf der beifahrerseitigen Scheibenhälfte ein außenseitiger Bereich nicht erfaßt wird. Bei einer zweiarmigen Scheibenwischeranlage könnte etwa nur der Angriffspunkt des Schwenkantriebes des fahrerseitigen Wischerarmes nach außen verschoben werden, was einen kleineren Wischwinkel und eine kleinere Wischerblattgeschwindigkeit ergibt, während auf der Beifahrerseite ein größerer Wischerwinkel und eine größere Geschwindigkeit auftritt, sodaß die Scheibe dennoch vollflächig gereingigt wird. Ebenso ist es auch denkbar für die Veränderung des Wischwinkels die Kurbellänge des Schwenkantriebes zu verändern.

Für die Ausbildung des Steuergetriebes sind verschiedene Möglichkeiten gegeben. So sieht eine erste Ausführung vor, daß im Steuerelement ein federbeaufschlagter Steuerstift verschiebbar gelagert ist und das Abtastelement durch eine im Lagergehäuse ausgebildete Steuerkurve ausgebildet ist, die am Steuerstift anliegt. Das Anlageende des Steuerstiftes ist dabei bevorzugt mit einer reibungsvermindernden Rolle versehen. Der Steuerstift ist dabei im Steuerelement in seiner gesamten Länge geführt, wobei die Rolle an einem aus der Führung hochstehenden Teil angeordnet ist und das Abtastelement das Steuerelement teilweise überdeckt. Die Elemente des Steuergetriebes können aber auch vertauscht sein. Da für die geradlinige Parallelführung des Wischer-blattes eine Änderung der wirksamen Wischerarmlänge, das heißt eine Änderung des Abstandes zwischen dem Drehlager und dem Schwenklager notwendig ist, sieht eine weitere bevorzugte Ausführung vor, daß der Wischerarm aus zumindest zwei teles-kopisch ineinander verschiebbaren Teilen besteht und am Steuerelement zwei Seil-spulen über eine Verzahnung gegen-läufig drehbar gelagert sind, wobei die Parallelführung des Wischerblattes einen Seilzug umfaßt, der einerseits mit einer das Wischerblatt tragenden Drehscheibe verbunden, und andererseits auf den Seilspulen ausziehbar aufgewickelt ist.

Diese Ausführung enthält somit keine wesentlich platzraubenden Bauteile, sodaß der Einbau der Scheibenwischeranlage in jedem Personenkraftwagen möglich ist. Der Platzbedarf für die erfindungsgemäße Scheibenwischeranlage übersteigt den für herkömmliche, einfache Scheibenwischer keinesfalls.

Über die beiden Abschnitte des Seilzuges liegt eine einer starren Parallelführung ähnliche Art von Kopplung des Lagergehäuses mit der das Wischerblatt tragenden Drehscheibe vor, wobei die auf die Seilspulen aufgewickelten Enden des Seilzuges die durch die Längenänderung des Wischerarmes erforderliche Seillängenanpassung sicherstellen.
Dabei ist in einer bevorzugten Ausführung weiters vorgesehen, daß der Steuerstift mit einer Verzahnung versehen ist, die in ein die Seilspule gegenläufig drehendes Getriebe eingreift.

Hierdurch wird die Seillängenanpassung vom jeweiligen Schwenkwinkel des Wischerarmes abhängig gemacht. Hiezu ist es in einer Ausführung denkbar, daß der Steuerstift einen Längsschlitz aufweist, der mit zwei Zahnleisten versehen ist, wobei in jede Zahnleiste ein eine Seilspule antreibendes Ritzel eingreift. Eine vorteilhafte Ausführung ergibt sich dabei, wenn die Seilspulen koaxial übereinander angeordnet sind und die beiden Zahnleisten in verschiedenen Höhen im Längsschlitz angeordnet sind, wobei ein Ritzel mit der ersten Seilspule mittels einer Hohlwelle verbunden ist, in der die Welle der zweiten Seilspule angeordnet ist. Anstelle zweier Zahnleisten kann auch nur eine vorgesehen sein, wobei die gegenläufige Drehbewegung der weiteren Seilspule über ein zwischen den beiden Seilspulen angeordnetes Übertragungselement erfolgt.

Der Steuerstift könnte auch zwischen den beiden Seilspulen vorgesehen werden und in einer anderen Variante ist es denkbar, daß die Seilspulen umfangsverzahnt nebeneinander im Steuerelement angeordnet sind. Anstelle der Verzahnung und der in diese eingreifenden Zahnräder könnte für die Bewegungsübertragung auch ein Seilzug zwischen dem Steuerstift und den Seilspulen Verwendung finden.

Für die Rückholung des ausgezogenen Seilzuges ist weiters bevorzugt vorgesehen, daß den Seilspulen eine Spiralfeder zugeordnet ist. Die Spiralfeder ist dabei zwischen den beiden übereinander liegenden Seilspulen angeordnet, die jeweils eine seitlche Ausnehmung aufweisen. Es könnte aber auch jeder Seilspule eine eigene Spiralfeder zugeordnet sein, die sich beispielsweise am Lagergehäuse abstützt.

Um bei in der Höhe stärker gekrümmten Windschutzscheiben die Anlage des Wischerblattes in der gesamten Höhe zu erreichen, kann weiters vorgesehen sein, daß die teleskopisch angeordneten Teile in Längsrichtung gekrümmt sind.

Eine weitere bevorzugte Ausführung, die die Verkürzung des ausgeschobenen Wischerarmes bewerkstelligt, sieht vor, daß die teleskopisch angeordneten Teile des Wischerarmes gegen die Kraft einer Schraubenfeder einziehbar sind. Die Schraubenfeder beaufschlagt somit den Wischerarm ständig im Sinne einer Verlängerung, der durch die sich abspulenden Seillängen Rechnung getragen wird, wenn beim Verschwenken des Wischerarmes der Steuerstift der Steuerkurve folgt, und damit die Seilspulen so antreibt, daß das Seil freigegeben wird. Die Schraubenfeder beaufschlagt damit indirekt auch den Steuerstift. Bei der Rückschwenkung erfolgt ein gegensätzlicher Bewegungsablauf. Die Steuerkurve verschiebt den Steuerstift, der über seine Verzahnung die Seilspulen entgegengesetzt antreibt, sodaß die beiden Seile eingezogen werden, wobei der Wischerarm gegen die Schraubenfeder komprimiert wird. Ist den Seilspulen eine Spiralfeder zugeordnet, so wird für die entgegengesetzt wirkende Schraubenfeder eine geringfügig größere Federkraft gewählt. Dadurch sind im Ruhezustand sowohl der Steuerstift als auch die in seine Verzahnung eingreifenden Ritzel nahezu unbelastet und es werden im Betriebszustand Belastungsspitzen vermieden. Die beschriebene Parallelführung über einen Seilzug stellt jedoch nur eine mögliche Ausbildung dar. Anstelle eines Seilzuges und zweier sich gegenläufig drehender Seilspulen wären auch andere Getriebeformen denkbar, beispielsweise ein kegelverzahntes Abrollelement, das mit einer kegelverzahnten längenveränderbaren Welle eine kegelverzahnte Drehscheibe des Wischerblattes verbindet, wobei ebenfalls eine Feder Verwendung findet.

In einer bevorzugten Ausführung ist weiters vorgesehen, daß die Schraubenfeder an dem an das Lagergehäuse anschließenden Teil und an dem die Drehscheibe lagernden Endteil des Wischerarmes fixiert und von einem Faltenbalg umgeben ist. Durch den Faltenbalg werden der Wischerarm bzw. alle beweglichen Teile nach außen abgeschirmt und ein ansprechendes Aussehen erzielt, wobei eine Schmierung aller beweglichen Teile im Wischerarm erzielbar ist, wenn der Faltenbalg mit einem Schmiermittel, beispielsweise Fett gefüllt wird. Statt über die Feder könnten die teleskopisch verschiebbaren Teile auch über einen weiteren Seilzug oder über eine Verzahnung bewegbar sein.

Liegen die beiden Seilspulen koaxial, so können sie einen relativ großen Durchmesser aufweisen, wodurch sich eine zusätzliche Untersetzung zwischen dem Steuerstift und der Seilspule erübrigt. Um eine exakte Parallelführung zu erzielen, müßte die Drehscheibe für das Wischerblatt denselben großen Durchmesser aufweisen. Da das Drehlager des Wischerarmes und die Wischerblatthalterung möglichst schmal gehalten werden müssen, ist in einer weiteren Ausführung vorgesehen, daß die Drehscheibe des Wischerblattes eine Verzahnung aufweist, in die eine vom Seilzug getriebene Antriebsschnecke eingreift, deren Stillstand die Verdrehung des Wischerblattes sperrt. Durch die Verwendung einer Schnecke für den Antrieb der Drehscheibe wird hier die Untersetzung erzielt, sodaß die Seilspulen den gewünschten größeren Durchmesser aufweisen können. Anstelle der Antriebsschnecke könnte auch anderes geignetes Untersetzungsgetriebe vorgesehen werden. Der Antriebsschnecke kann eine Seilscheibe zugeordnet sein, über die der Seilzug geführt ist, wobei auch ein Formschluß zwischen Seil und Seilscheibe ausgebildet werden kann, beispielsweise durch Verdickungen des Seils und Ausnehmungen der Seilscheibe. Bevorzugt wird eine Ausführung gewählt, in der die Antriebsschnecke mit einer Seiltrommel verbunden ist, auf der die Seile des Seilzuges gegenläufig aufgewickelt sind.

Da Windschutzscheiben insbesondere bei Personenkraftwagen nicht rechteckig, sondern oft trapezförmig sind, bewirkt eine exakte Parallelführung des Wischerblattes keine vollflächige Erfassung der Scheibe von Seitenrand zu Seitenrand bzw. innerhalb des gewünschten Wischbereiches. Mittels unterschiedlicher Durchmesser bzw. wählbarer Untersetzungen zwischen Antriebsschnecke und Drehscheibe läßt sich auch eine angepaßte trapezförmige Wischfläche erzielen, wobei das Wischerblatt sich in bezug auf den Wischerarm um einen gegenüber dem Schwenkwinkel vergrößerten Drehwinkel verdreht. Durch entsprechende Ausbildung der Steuerkurve kann die Wischfläche auch einem gebogenen Längsrand der Scheibe angepaßt werden.

Für die Anpressung des Wischerblattes an die Scheibe sieht eine weitere bevorzugte Ausführung vor, daß der Wischerarm am Lagergehäuse um eine Querachse schwenkbar gelagert und von einer das Wischerblatt an die Scheibe anpressenden Schraubenfeder beaufschlagt ist, die einerseits am Wischerarm und andererseits am Steuerelement exzentrisch zur Schwenkachse angreift. Die exzentrische Fixierung der Anpreßfeder am Steuerelement hat den Vorteil, daß die Anpreßkraft mit zunehmendem Schwenkwinkel verstärkt wird, da sich die Federspannung aufgrund der Verlängerung der Feder verändert.

In der bevorzugten Ausführung mit Seilzug und Schraubenfeder kann aber auch die Schraubenfeder des Wischerarmes für die Anpressung des Wischerblattes verwendet werden, wenn in dem an das Lagergehäuse anschließenden Teil des Wischerarmes eine Querachse an der vom Wischerblatt abgewandten Seite des Seilzuges vorgesehen ist, auf der der restliche Teil des Wischerarmes schwenkbar gelagert ist. Somit liegt der durch die Feder unter Spannung gehaltene Seilzug näher zur Scheibe als die Querachse, sodaß eine Beaufschlagung des Wischerarmes und damit des Wischerblattes zur Scheibe hin erfolgt. Insbesondere kann in einer derartigen Ausführung weiters vorgesehen sein, daß ein im Bereich des unteren Scheibenrandes am Kraftfahrzeug zu montierender Bügel vorgesehen ist, auf den der Wischerarm bei der Verschwenkung des Grundkörpers in die Ruhestellung aufläuft, wobei das Wischerblatt von der Scheibe abhebt. Dadurch wird in der Ruhestellung die Anlage des Wischerblattes an der Scheibe verhindert, sodaß es im Winter nicht festfrieren und im Sommer unter Schmutz- und Sonneneinwirkung nicht verkleben kann.

Nachstehend wird nun die Erfindung an Hand der Figuren beiliegender Zeichnungen näher beschrieben, ohne darauf beschränkt zu sein.

Es zeigen:
Fig. 1 bis 7 Draufsichten auf Windschutzscheiben von Kraftfahrzeugen mit erfindungsgemäßen Scheibenwischeranlagen, wobei der Wischerarm jeweils in mehreren Positionen gezeigt ist,

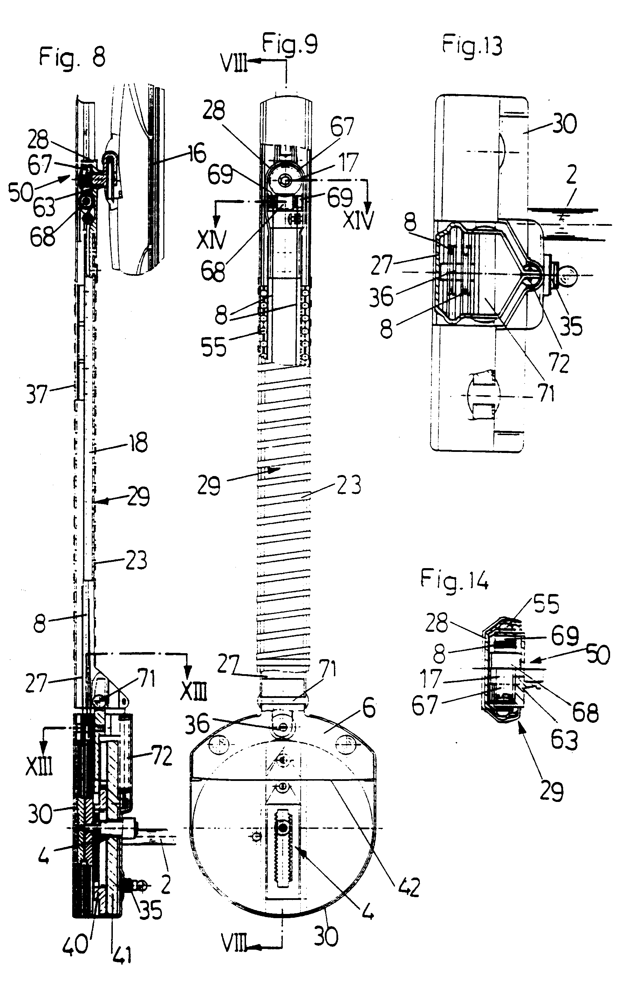

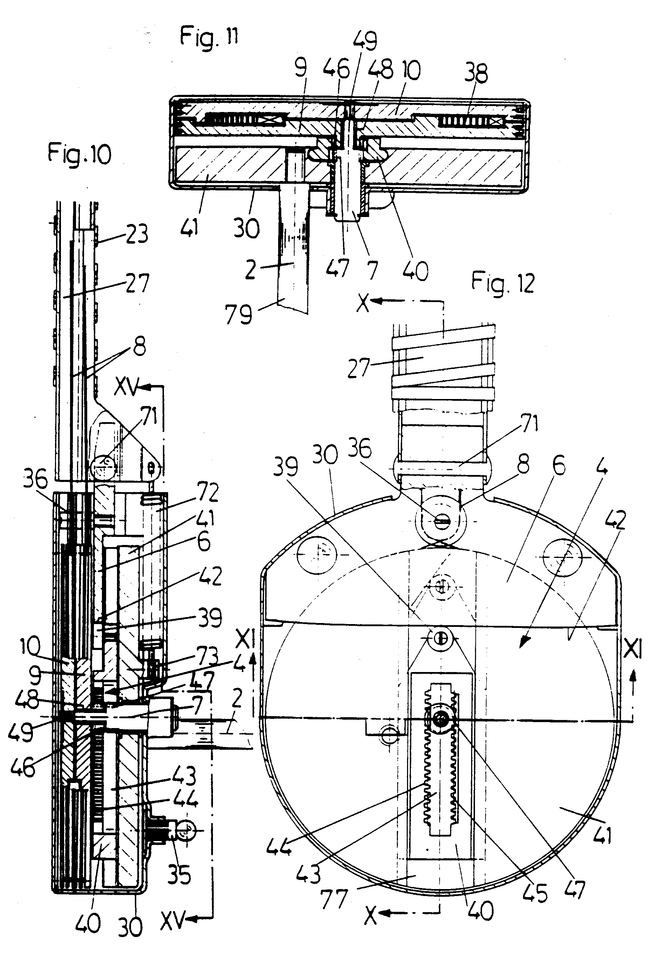

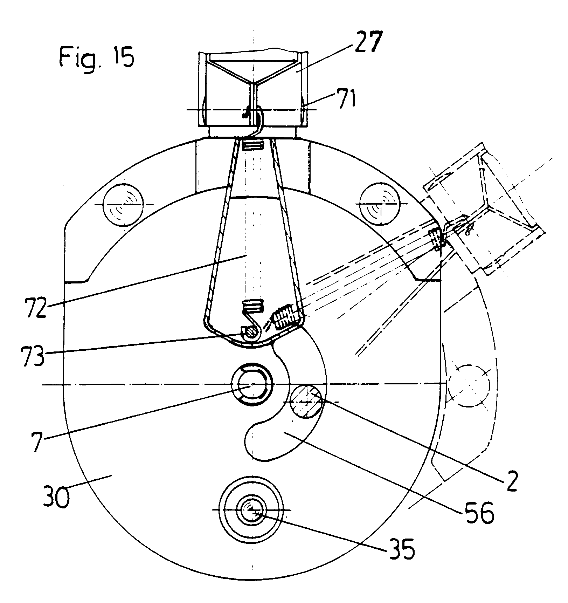

Fig. 8 bis 15 Details einer ersten Ausführung einer Scheibenwischeranlage, wobei Fig. 8 einen Längsschnitt nach der Linie VIII-VIII von Fig. 9,Fig. 9 eine teilgeschnittene Draufsicht, Fig. 10 vergrößert den Lagerbereich des Wischerarmes im Längsschnitt nach der Linie X-X von Fig. 12, Fig. 11 einen Schnitt nach der Linie XI-XI von Fig. 12, Fig. 12 vergrößert den Lagerbereich des Wischerarmes im Schnitt gemäß Fig. 9, Fig. 13 einen Schnitt nach der Linie XIII-XIII von Fig. 8, Fig. 14 einen Schnitt nach der Linie XIV-XIV von Fig. 9 und Fig. 15 einen Schnitt nach der Linie XV-XV von Fig. 10 darstellt,
Fig. 16 bis 18 schematisch eine Einrichtung zum Wechsel zwischen paralleler und schwenkender Führung des Wischerblattes, wobei Fig. 16 die fahrzeugfeste Anordnung und Fig. 17 die wischerarmfeste Anordnung des Steuergetriebes darstellen und Fig. 18 eine Seitenansicht der Anordnung nach Fig. 16 ist,
Fig. 19 eine Seitenansicht gemäß Fig. 18 einer zweiten Ausführung der Wechseleinrichtung,
Fig. 20 eine Seitenansicht gemäß Fig. 18 einer dritten Ausführung der Wechseleinrichtung, und
Fig. 21 eine schematische Draufsicht auf eine weitere Ausführung der Wechseleinrichtung mit einem verschiebbaren Angriffspunkt des Schwenkantriebes.

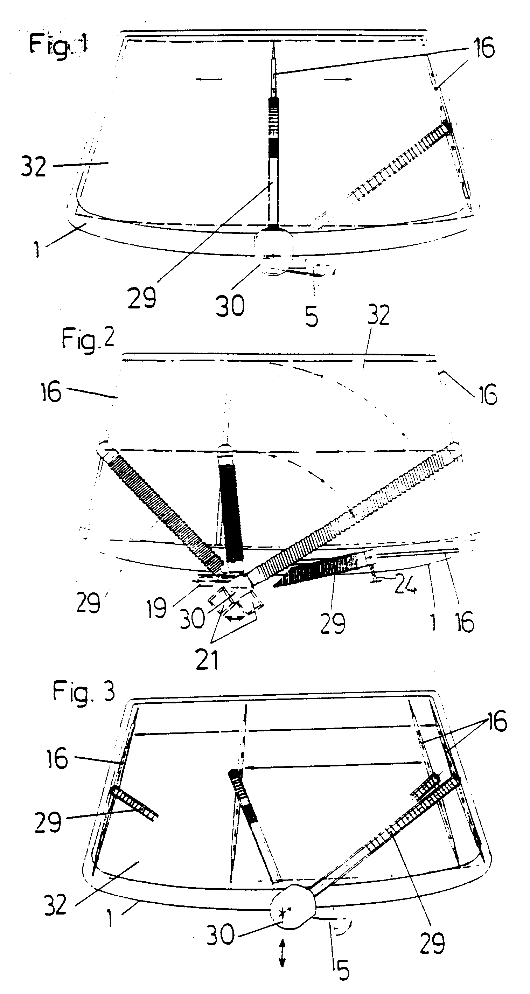

Ein Kraftfahrzeug 1 weist eine etwa trapezförmige, gewölbte und seitlich gegebenenfalls stärker rückgebogene Windschutzscheibe 32 auf, der eine Einarmscheibenwischeranlage zugeordnet ist. Diese ist mit einem in der Länge verstellbaren, ein Lagergehäuse 30 aufweisenden Wischerarm 29 versehen, der in Fig. 1 bis 7 jeweils in verschiedenen Positionen während des vom Schwenkantrieb 5 gesteuerten Bewegungsablaufes eingezeichnet ist. Am Wischerarm 29 ist ein Wischerblatt 16 drehbar gelagert. Die Scheibenwischeranlage ist am Kraftfahrzeug 1 unterhalb der Windschutzscheibe 32 angeordnet.

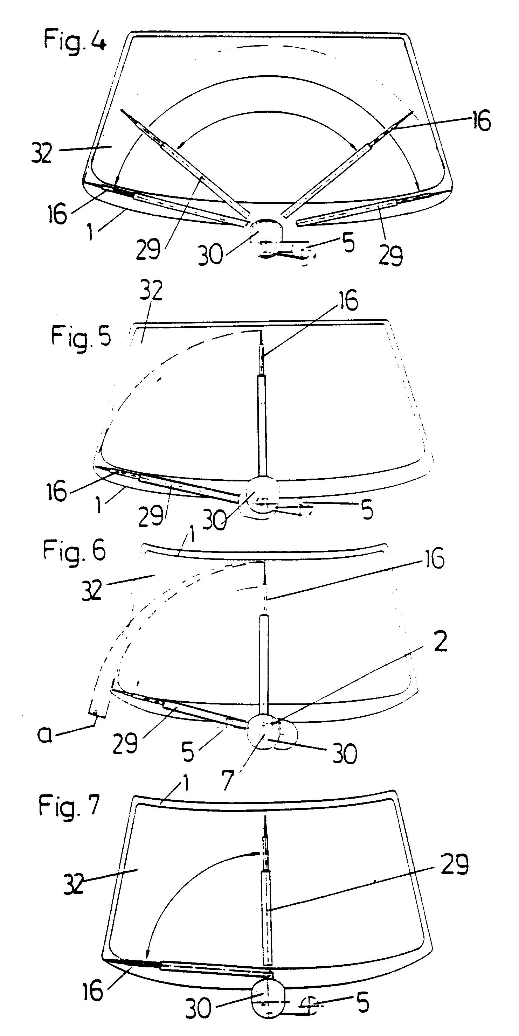

Fig. 1 zeigt eine mittige Anordnung der Scheibenwischeranlage, wobei sich der Wischerarm 29 in der mittleren Arbeitsstellung über die Höhe der Scheibe 32 erstreckt, in der er seine kürzeste Länge aufweist, und in der das annähernd parallel geführte Wischerblatt 16 mit dem Wischerarm 29 fluchtet. Beim Verschwenken des Wischerarmes 29 überstreicht das Wischerblatt 16 die strichliert umrandete Fläche, wobei es jedoch zu einer geringfügigen Neigung des Wischerblattes 16 kommt, sodaß es in der Endstellung sich entlang der Scheibenränder erstreckt. Der Wischerarm 29 ist aus der mittleren Arbeitsstellung in zumindest eine Ruhestellung überführbar, die in den Fig. 4 bis 7 eingezeichnet ist und in der das Wischerblatt 16 ohne Verdrehung gegenüber dem Wischerarm 29 entlang des unteren Scheibenrandes liegt. Ein Schwenkantrieb 5 ist ebenfalls fahrzeugfest angeordnet.

Gemäß Fig. 2 dient eine außermittige Anordnung der Scheibenwischeranlage dazu, bei einer Windschutzscheibe 32 mit größerer Höhe die Ruhestellung zu erreichen, ohne daß das Wischerblatt 16 seitlich vorsteht. Die vollflächige Überstreichung der Scheibe 32 wird durch unterschiedliche Wischerarmverlängerungen in den beiden Randstellungen erreicht, wobei die über einen Stellantrieb 19 erreichbare Ruhestellung fahrerseitig gegeben ist. Dadurch wird beim Einschalten des Scheibenwischers bereits durch das Hochschwenken in die mittlere Arbeitsstellung der fahrerseitige Scheibenteil überstrichen.

Fig. 3 zeigt wiederum eine mittige Anordnung, in der die beiden symmetrischen Randstellungen des Normalbetriebes und die beiden asymmetrischen Randstellungen eines Betriebes bei hoher Fahrzeuggeschwindigkeit und starkem Regen gezeigt sind, in dem das Wischfeld durch Verlegung des Angriffspunktes des Schwenkantriebes 5 verkleinert ist.

Fig. 4 zeigt die Scheibenwischeranlage gemäß Fig. 1, wobei die Scheibenwischeranlage wie herkömmliche Scheibenwischer mit schwenkend geführtem Wischerblatt gezeigt ist. Auch hier sind Randstellungen zweier durch eine Verlegung des Schwenkantriebsangriffspunktes entstehender Wischfelder unterschiedlicher Größe dargestellt. Die Randstellungen des größeren Wischfeldes sind dabei gleichzeitig auch Ruhestellungen.

Fig. 5 und 6 zeigen mittige Anordnungen, die um eine außenmittige Lagerachse 2 verschwenkt werden, sodaß bei Scheiben 32 größerer Höhe das Wischerblatt 16 in Ruhestellung nicht seitlich übersteht, wobei Fig. 5 eine geringere seitliche Versetzung zeigt und für Fahrzeuge mit nach unten beschränktem Freiraum für das sich verdrehende Lagergehäuse 30 darstellt. Fig. 6 erfordert einen größeren unteren und seitlichen Freiraum für das Lagergehäuse 30, führt jedoch zu einer extremen Verlegung des Wischerblattes 16, um die Distanz a. Hier ist ein maximaler Abstand zwischen der Lagerachse 2 und der Schwenkachse 7 gegeben.

Fig. 7 zeigt eine weitere Variante, bei der der Wischerarm 29 für die Überführung in die Ruhestellung auf dem Lagergehäuse 30 verschwenkbar ist, womit sich ebenfalls eine Verkürzung der Seitenerstreckung ergibt.

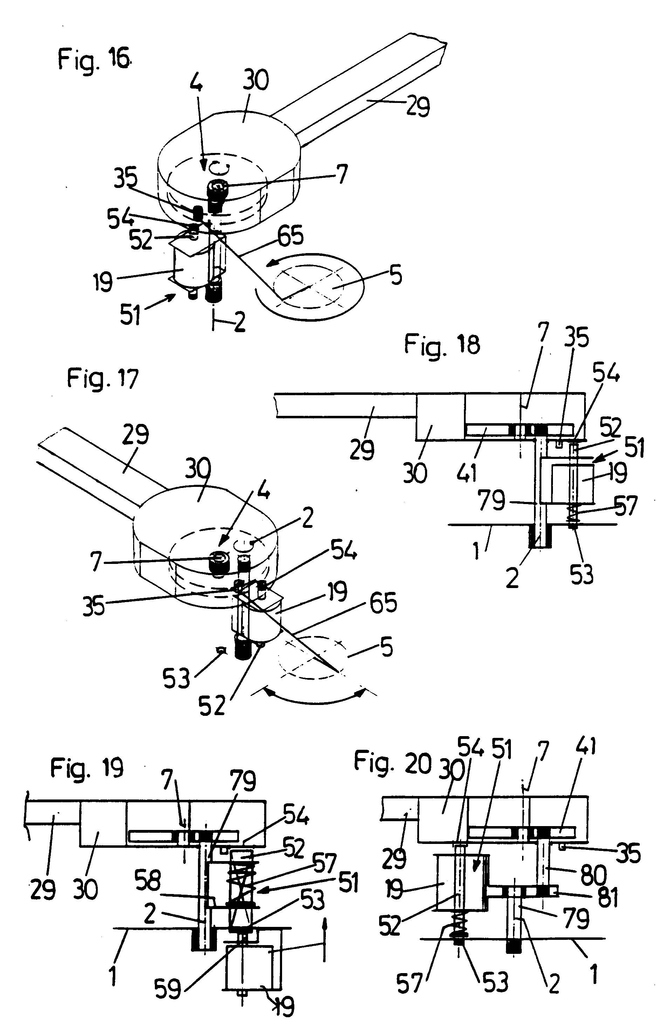

Konstruktive Details sind im Ausführungsbeispiel gemäß den Fig. 8 bis 15 dargestellt, das, beispielsweise gemäß Fig. 1 oder 5 am Kraftfahrzeug 1 angeordnet ist, ist das Lagergehäuse 30 um eine fahrzeugfeste Lagerachse 2 schwenkbar angeordnet und weist einen Gelenkbolzen 35 auf, an dem ein Lenker 65 (Fig.16) des ebenfalls fahrzeugfesten Schwenkantriebes 5 angreift. Die Lagerachse 2 durchdringt einen kreisbogenförmigen Schlitz 56 und trägt ein plattenförmiges ebenfalls fahrzeugfestes Steuerelement 41 eines Steuergetriebes 4. Im Steuerelement 41 ist in einer Längsnut 77 ein Steuerstift 40 federbeaufschlagt verschiebbar angeordnet, der mit einer Steuerkurve 42 eines im Lagergehäuse 30 ausgebildeten Abtastelement 6 des Steuergetriebes 4 zusammenwirkt, wobei der Anlageteil an der Steuerkurve 42 durch eine Rolle 39 gebildet ist. Der Steuerstift 40 weist einen Längsschlitz 43 auf, an dessen beiden Längsseiten in verschiedenen Höhen zwei Zahnleisten 44 und 45 vorgesehen sind. Die im Lagergehäuse befestigte Schwenkachse 7 durchsetzt das Steuerelement 41 und den Längsschlitz 43 des Steuerstiftes 40 und trägt ein Ritzel 47, das in die Zahnleiste 45 eingreift, sowie eine Seilspule 10. Auf der Schwenkachse 7 ist weiters eine Hohlwelle 48 gelagert, die ein in die Zahnleiste 44 eingreifendes Ritzel 46 trägt und mit einer Seilspule 9 verbunden ist. Wird durch Verdrehen des Lagergehäuses 30 über die Steuerkurve 42 der Steuerstift 40 verschoben (Fig. 12), so werden über die beiden, in jeweils eine Zahnleiste 44,45 eingreifenden Ritzel 46,47 die beiden koaxial angeordneten Seilspulen 9, 10 gegenläufig verdreht. Die beiden Seile eines Seilzuges 8 werden dabei von den Seilspulen 9,10 auf- oder abgewickelt. An den beiden Seilspulen 9,10 stützt sich eine Spiralfeder 38 ab (Fig. 11), die in zueinander weisenden Ausnehmungen der Seilspulen 9,10 angeordnet ist, und den Seilzug 8 im Sinne des Aufwickelns beaufschlagt. Der Seilzug 8 läuft über zwei im Lagergehäuse 30 angeordnete Umlenkrollen 36, sodaß die beiden Seile mit geringem Abstand im Wischerarm 29 verlaufen. Der Wischerarm 29 besteht aus zumindest zwei Teilen 27, 28, von denen der Teil 27 am im Lagergehäuse 30 ausgebildeten Abtastelement 6 mittels einer Querachse 71 angelenkt und über eine an der Wischerblattseite angeordnete Schraübenfeder 72 mit dem Steuerelement 41 verspannt, sodaß der Wischerarm 29 gegen die Scheibe 32 gepreßt wird. Wie aus Fig. 15 ersichtlich, greift die Schraübenfeder 72 an einem Stift 73 des Steuerelementes 41 an, der exzentrisch zur Schwenkachse 7 angeordnet ist, sodaß die Verschwenkung des Wischerarmes 29 die Federspannung und damit den Anpreßdruck des Wischerblattes 16 erhöht.

Die Teile 27 und 28 des Wischerarmes 29 sind teleskopisch verschiebbare, gegebenenfalls in Längsrichtung gekrümmte Profile, die gegebenenfalls einen Mittelteil 18 enthalten können und zwischen denen ein oder zwei Wälzlagerkäfige 55 angeordnet sind. Der Endteil 28 des Wischerarmes 29 trägt ein Drehlager 63 für den Drehantrieb 50 des Wischerblattes 16. Im Drehlager 63 ist eine das Wischerblatt 16 tragende Drehscheibe 17 gelagert, die eine Umfangsverzahnung 67 aufweist. Diese kämmt mit einer Antriebsschnecke 68, der zwei Seiltrommeln 69 zugeordnet sind, auf denen die beiden Seile des Seilzuges 8 gegenläufig aufgewickelt fixiert sind. Für die Federbeaufschlagung des Steuerstiftes 40 ist im Wischerarm 29 eine die beiden Teile 27,28 ausschiebende Schraubenfeder 37 vorgesehen. Diese wirkt gegen die Spiralfeder 38 über die auf den Seiltrommeln 69 fixierten Seile des Seilzuges 8, die Seilspulen 9,10 und die mit diesen verbundenen Ritzeln 46,47 auf den Steuerstift 40, der an die Steuerkurve 42 angedrückt wird. Bei der Verschwenkung des Lagergehäuses 30 bewirkt die Verschiebung des Steuerstiftes 40 somit eine Längenänderung des aufgrund der Schraubenfeder 37 nach außen beaufschlagten Wischerarmes 29 mit gleichzeitiger und gleicher Längenänderung der beiden Seile des Seilzuges 8, wobei die im wesentlichen parallel führenden Seile den Drehantrieb 50 des Wischerblattes 16 bilden. Die Wahl der Untersetzung zwischen der Drehscheibe 17 und der Antriebsschnecke 68, des Durchmessers der Seilspulen 9,10 und des Durchmessers der Ritzel 45,46 bzw. der Breite des Längsschlitzes 43 bestimmen den Drehwinkel des Wischerblattes 16 in Abhängigkeit vom Schwenkwinkel des Wischerarmes 29, wobei eine Anpassung an die jeweilige Form der Windschutzscheibe 32 bzw. das gewünschte Wischfeld problemlos möglich ist. Der Wischerarm 29 ist von einem schützenden, gegebenfalls schmiermittelgefüllten Faltenbalg 23 umgeben.

Wie in Fig. 2 eingezeichnet, kann der Wischerarm 29 in der Ruhestellung auf einem mit einer schrägen Auflauffläche versehenen Bügel 24 oder dergleichen aufliegen, sodaß das Wischerblatt 16 geschont wird. Durch entsprechende Wahl der in Fig. 2 gezeigten asymmetrischen Anordnung unterhalb der Windschutzscheibe 32 kann der Wischerarm 29 unabhängig von Längen-Breiten(Höhen-)verhältnis der Windschutzscheibe 32 in die Ruhestellung überführt werden und gleichzeitig auch fahrerseitig eine geringere Wischerblattgeschwindigkeit als beifahrerseitig erzielt werden. Der Stellantrieb 19 kann beispielsweise einen vom Motorunterdruck betätigten Servo-kolben, einen Elektromotor, einen Elektromagneten usw. umfassen.

In den Fig. 16 bis 18 ist schematisch eine für die in den Fig. 1 und 3 bis 6 gezeigten Scheibenwischeranlagen mit fahrzeugfestem Schwenkantrieb 5 geeignete Einrichtung zum Wechsel zwischen einer parallelen und schwenkenden Führung dargestellt, die beispielsweise der in den Fig. 8 bis 15 näher erläuterten Ausführung zugeordnet werden kann. Das Steuerelement 41 des Steuergetriebes 4 ist auf einem die Lagerachse 2 definierenden Bolzen 79 fixiert, der in einem fahrzeugfesten Lager drehbar angeordnet ist. An diesem Bolzen 79 ist der Stellantrieb 19 fixiert, der beispielsweise als Hubmagnet ausgebildet ist und eine Verriegelungseinrichtung 51 (Fig. 18) betätigt, die in dieser Ausführung einen einzigen Sperrstift 52 aufweist. Der Sperrstift 52 ist parallel zum Bolzen 79 verschiebbar und wird durch eine Feder 57 zum Kraftfahrzeug 1 hin beaufschlagt. Fig. 16 zeigt die fahrzeugfeste Verriegelung des Steuerelementes 41, in dem das untere Ende des Sperrstifts 52 von der Feder 57 in eine Öffnung 53 des Kraftfahrzeuges 1 eingedruckt ist, sodaß das Lagergehäuse 30 um die Schwenkachse 7 verschwenkt wird. Bei Betätigung des Stellantriebes 19 wird der Sperrstift 52 aus der Öffnung 53 gelöst und in die Öffnung 54 im Lagergehäuse 30 eingeschoben (Fig. 17), sodaß eine wischerfeste Verriegelung gegeben ist. Der Schwenkantrieb 5 bewegt nun mit dem Lagergehäuse 30 auch das komplette Steuergetriebe 4, das somit außer Funktion ist, um die Lagerachse 2, wodurch das Wischerblatt 16 im Kreisbogen mitschwenkt (Fig. 4 bis 6).

Fig. 19 zeigt eine Variante in der am Bolzen 79 eine Halterung 58 für den Sperrstift 52 zugeordnet ist, der wiederum zwischen den wechselnden Eingriffen in den Öffnungen 53 und 54 mittels des Stellantriebs 19 bewegbar ist. Der Stellantrieb 19 ist dabei fahrzeugfest angeordnet und weist einen den Sperrstift 52 aus der Fahrzeugöffnung 53 drückenden Schieber 59 auf, wobei die Öffnung 53 bis zur Stillsetzung des Stellantriebes 19 von Schieber 59 ausgefüllt verbleibt.

Fig. 20 zeigt eine Variante, die funktionell der Ausführung nach Fig. 26 entspricht. Der Stellantrieb 19 ist an einem auf dem Bolzen 79 verschwenkbaren Querelement 81 angeordnet und der Sperrstift 52 greift wiederum wechselweise in die Öffnung 53 des Kraftfahrzeuges 1 oder die Öffnung 54 des Längsgehäuses 1 ein. Vom Querelement 81 erstreckt sich ein Verbindungsstift 80 zum Steuerelement 41, das in der gezeigten Stellung somit ebenfalls fahrzeugfest ist. Wird der Stellantrieb 19 betätigt, verriegelt der Sperrstift 52 das Querelement 81 mit dem Lagergehäuse 30, sodaß dieses einschließlich des Steuergetriebes um die Lagerachse 2 verschwenken kann. Nach dieser Ausführung sind durch wählbare Querträger verschiedene Abstände zwischen der Lagerachse 2 und der Schwenkachse 7 in einfacher Weise herstellbar, sodaß eine Anpassung an unterschiedliche Scheibenformate, beispielsweise gemäß Fig. 4 bis 6 sehr einfach ist.

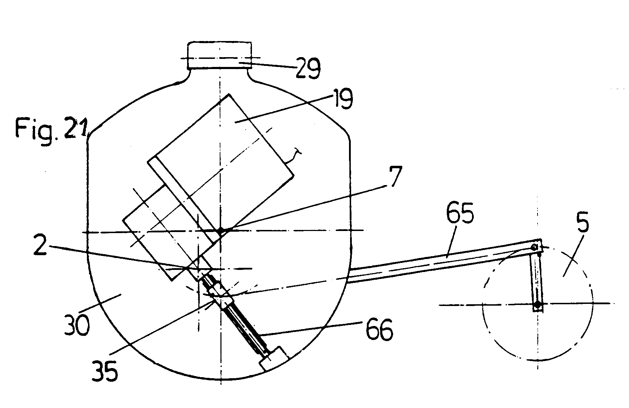

In der Fig. 21 ist eine weitere Ausführung einer Wechseleinrichtung bei fahrzeugfestem Schwenkantrieb 5 gezeigt, wobei die Wechseleinrichtung innerhalb des Lagergehäuses 30 ausgebildet ist. In dieser Ausführung ist das Steuerelement 41 des Steuergetriebes 4 um die Lagerachse 2 drehbar angeordnet. Der Stellantrieb 19 ist auf dem Lagergehäuse 30 angeordnet und in dieser Ausführung insbesondere durch einen Elektromotor mit einer Gewindespindel 66 gebildet, die einen Schlitten durchsetzt. Am Schlitten ist der Gelenksbolzen 35 für den Eingriff des Schwenkantriebes 5 vorgesehen. Da damit der Angriffspunkt des Schwenkarmes zur Lagerachse 2 näher als zur Schwenkachse (7) ist, wird der Schwenkwinkel vergrößert, sodaß der Wischerarm 29 in der Ruhestellung tiefer liegt als während der Wischbewegung und die Wischergeschwindigkeit beschleunigt ist. Der Schlitten kann aus der Parallelführungstellung des Wischerblattes 16 dank des Stellantriebes 19 auch von der Lagerachse 2 entfernt werden, wodurch sich eine Verringerung der Wischergeschwindigkeit und eine Verkleinerung des Wischerfeldes ergibt (Fig. 3, 4). Dies kann insbesondere für hohe Fahrgeschwindigkeiten von Bedeutung sein, um die einwandfreie Funktion der Scheibenwischeranlage zu gewährleisten. Fig. 21 zeigt ein Lagergehäuse 30, bei dem die Schwenkachse 7 und die Lagerachse 2 mit Abstand zueinander angeordnet sind, wobei die Gewindespindel 66 etwa unter 45 ° zur Symmetrieebene des Wischerarmes 29 verläuft. Die Verschiebung des Gelenkbolzens 35 verändert wiederum die Lage des Lenkers 65 des Schwenkantriebes 5 und die Größe des Schwenkwinkels des Wischerarmes 29. Insbesondere aus der Fig. 21 ist ersichtlich, daß die Verschiebung des Gelenkbolzens 35 auch eine Verschiebung der mittleren Arbeitsstellung mit sich bringt, sodaß diese gemäß Fig. 3 trotz mittiger Anordnung der Scheibenwischeranlage ein asymmetrisches Wischerfeld erzeugt. Eine Verkleinerung des Wischwinkels durch Vergrößerung des Abstandes zwischen der Schwenkachse 7 und dem Angriffspunkt des Schwenkantriebs 5 am Lagergehäuse 30 läßt somit gemäß Fig. 3 fahrerseitig nur einen minimalen Randstreifen unberührt, während der unberührte Randstreifen auf der Beifahrerseite wesentlich größer ist. Diese Stellung kann wie erwähnt bei hoher Fahrgeschwindigkeit und starken Regen wichtig sein, wobei die Sicht des Beifahrers von untergeordneter Bedeutung ist.

## Patentansprüche

1. Scheibenwischeranlage, insbesondere für Personenkraftwagen, mit einem um eine Schwenkachse (7) schwenkbaren Wischerarm (29), der ein Lagergehäuse (30) und am freien Endteil (28) ein Drehlager (63) für ein im wesentlichen parallel über die Scheibe (32) führbares Wischerblatt (16) aufweist, das sowohl in einer mittleren Arbeitsstellung als auch in einer in den Bereich des unteren Scheibenrandes verschwenkten Ruhestellung annähernd parallel zum Wischerarm (29) liegt, mit einem mit Abstand zur Schwenkachse (7) an einem Gelenksbolzen (35) des Lagergehäuses (30) angreifenden, fahrzeugfesten Schwenkantrieb (5) für den Wischerarm (29), mit einem im Lagergehäuse (30) angeordneten Steuergetriebe (4) für den Drehantrieb (50) des Wischerblattes (16) während der Parallelführung, wobei das Steuergetriebe (4) ein während der Parallelführung auf einer Lagerachse (2) fahrzeugfest angeordnetes Steuerelement (41) sowie ein mit dem Wischerarm (29) schwenkendes Abtastelement (6) aufweist, und wobei die Lagerachse (2) mit Abstand parallel zur Schwenkachse (7) liegt, und mit einer Einrichtung zum Wechsel zwischen paralleler und schwenkender Führung des Wischerblattes (16), die einen Stellantrieb (19) aufweist, mittels dem das Steuerelement (41) in der mittleren Arbeitsstellung aus der fahrzeugfesten Anordnung in eine wischerarmfeste Anordnung überführbar ist, in der das Steuergetriebe (4) außer Funktion gesetzt, der Drehantrieb (50) des Wischerblattes (16) arretiert und der Schwenkwinkel des Wischerarmes (29) verändert ist, dadurch gekennzeichnet, daß die Schwenkachse (7) des Wischerarmes (29) auf dem Steuerelement (41) angeordnet ist, und daß das Lagergehäuse (30) während der Parallelführung des Wischerblattes (16) um die auf dem Steuerelement (41) angeordnete Schwenkachse (7) und während der Überführung in die Ruhestellung gemeinsam mit dem Steuerelement (41) um die Lagerachse (2) schwenkbar ist, wobei der Abstand des Gelenksbolzens (35) zur Lagerachse (2) kleiner als der Abstand des Gelenksbolzens (35) zur Schwenkachse (7) ist.

2. Scheibenwischeranlage nach Anspruch 1, dadurch gekennzeichnet, daß der Wischerarm (29) einen mit dem Lagergehäuse (30) verbundenen ersten Teil (27) und einen während der Parallelführung des Wischerblattes (16) im ersten Teil (27) teleskopisch verschiebbaren zweiten Teil (28) aufweist, an dem das Drehlager für das Wischerblatt (63) vorgesehen ist, und daß die Verschiebung des zweiten Teiles (28) ebenfalls von dem den Drehantrieb (50) des Wischerblattes (16) steuernden Steuergetriebe (4) gesteuert und in der wischerarmfesten Anordnung des Steuerelementes (41) blockiert ist.

3. Scheibenwischeranlage nach Anspruch 1 oder 2, mit einer vom Stellantrieb (19) beaufschlagten Verriegelungseinrichtung (51), die einen in eine Öffnung (53) eines fahrzeugfesten Bauteiles oder eine Öffnung (54) des Lagergehäuses (30) einschiebbaren Sperrstift (52) aufweist, wobei der Sperrstift (52) dem Steuerelement (41) zugeordnet ist, dadurch gekennzeichnet, daß der Sperrstift (52) parallel zur Lagerachse (2) verschiebbar ist.

4. Scheibenwischeranlage nach einem der Ansprüche 1 bis 3, dadurch gekennzeichnet, daß im Steuerelement (41) ein federbeaufschlagter Steuerstift (40) verschiebbar gelagert ist und das Abtastelement (6) durch eine im Lagergehäuse (30) ausgebildete Steuerkurve (42) ausgebildet ist, die am Steuerstift (40) anliegt.

5. Scheibenwischeranlage nach einem der Ansprüche 2 bis 4, dadurch gekennzeichnet, daß die Parallelführung des Wischerblattes (16) einen Seilzug (8) umfaßt, der einerseits mit einer das Wischerblatt (16) tragenden Drehscheibe (17) verbunden und andererseits auf Seilspulen (9, 10) ausziehbar aufgewickelt ist, die am Steuerelement (41) über eine Verzahnung (14, 15) gegenläufig drehbar gelagert sind.

6. Scheibenwischeranlage nach Ansprüchen 4 und 5, dadurch gekennzeichnet, daß der Steuerstift (40) mit einer Verzahnung (31) versehen ist, die in ein die Seilspulen (9, 10) gegenläufig drehendes Getriebe (11) eingreift.

7. Scheibenwischeranlage nach Anspruch 6, dadurch gekennzeichnet, daß der Steuerstift (40) einen Längsschlitz (43) aufweist, der mit zwei Zahnleisten (44, 45) versehen ist, wobei in jede zahnleiste (44, 45) ein eine Seilspule (9, 10) antreibendes Ritzel (46, 47) eingreift.

8. Scheibenwischeranlage nach Anspruch 7, dadurch gekennzeichnet, daß die Seilspulen (9, 10) koaxial übereinander angeordnet sind und die beiden Zahnleisten (44, 45) in verschiedenen Höhen im Längsschlitz (43) angeordnet sind, wobei ein Ritzel (46) mit der ersten Seilspule (9) mittels einer Hohlwelle (48) verbunden ist, in der die Welle (49) der zweiten Seilspule (10) angeordnet ist.

9. Scheibenwischeranlage nach Anspruch 6, dadurch gekennzeichnet, daß die Seilspulen (9, 10) umfangsverzahnt nebeneinander im Steuerelement (41) angeordnet sind.

10. Scheibenwischeranlage nach einem der Ansprüche 5 bis 9, dadurch gekennzeichnet, daß den Seilspulen (9, 10) eine Spiralfeder (38) zugeordnet ist, gegen die der Seilzug (8) ausziehbar ist.

11. Scheibenwischeranlage nach Anspruch 2, dadurch gekennzeichnet, daß die teleskopisch angeordneten Teile (27, 28) in Längsrichtung gekrümmt sind.

12. Scheibenwischeranlage nach Anspruch 2 oder 11, dadurch gekennzeichnet, daß die teleskopisch angeordneten Teile (27, 28) des Wischerarmes (29) gegen die Kraft einer Schraubenfeder (37) einziehbar sind.

13. Scheibenwischeranlage nach Ansprüchen 10 und 12, dadurch gekennzeichnet, daß die Federkraft der der Spiralfeder (38) entgegengesetzt wirkenden Schraübenfeder (37) größer ist.

14. Scheibenwischeranlage nach Anspruch 12, dadurch gekennzeichnet, daß die Schraubenfeder (37) an dem das Lagergehäuse (30) anschließenden Teil (27) und an dem die Drehscheibe (17) lagernden Endteil (28) des Wischerarmes (29) fixiert und von einem Faltenbalg (23) umgeben ist.

15. Scheibenwischeranlage nach Anspruch 5, dadurch gekennzeichnet, daß die Drehscheibe (17) des Wischerblattes (16) eine Verzahnung (67) aufweist, in die eine vom Seilzug (8) getriebene Antriebsschnecke (68) eingreift, deren Stillstand die Verdrehung des Wischerblattes (16) sperrt.

16. Scheibenwischeranlage nach Anspruch 15, dadurch gekennzeichnet, daß die Antriebsschnecke (68) mit einer Seiltrommel (69) verbunden ist, auf der die Seile des Seilzuges (8) gegenläufig aufgewickelt sind.

17. Scheibenwischeranlage nach einem der Ansprüche 5 bis 16, dadurch gekennzeichnet, daß das Steuerelement (41) bzw. dessen Seilspulen (9, 10) und die Drehscheibe (17) unterschiedliche Durchmesser aufweisen.

18. Scheibenwischeranlage nach einem der Ansprüche 5 bis 17, dadurch gekennzeichnet, daß in dem an das Lagergehäuse (30) anschließenden Teil (27) des Wischerarmes (29) eine Querachse (22) an der vom Wischerblatt (16) abgewandten Seite des Seilzuges (8) vorgesehen ist, auf der der restliche Teil des Wischerarmes (29) schwenkbar gelagert ist.

19. Scheibenwischeranlage nach einem der Ansprüche 1 bis 18, dadurch gekennzeichnet, daß ein im Bereich des unteren Scheibenrandes am Kraftfahrzeug (1) zu montierender Bügel (24) vorgesehen ist, auf den der Wischerarm (29) bei seiner Verschwenkung in die Ruhestellung aufläuft, wobei das Wischerblatt (16) von der Scheibe (32) abhebt.

## Claims

1. Windscreen wiper arrangement, particularly for cars, with a wiper arm (29) pivotable about a pivotal axis (7) which is provided with a bearing housing (30), and at the free end portion (28) with a rotary bearing (63) for a wiper blade (16) which can be moved in a substantially parallel manner over the screen (32) and which lies approximately parallel to the wiper arm (29) both in a mid operating position as well as in a rest position pivoted down to the lower edge region of the screen, with a rotary actuator (5) for the wiper arm (29) which is fixed to the vehicle and engages with a jointed pin (35) of the bearing housing (30) at a distance from the pivotal axis (7), with a control gearing (4) for the rotary drive (50) of the wiper blade (16) arranged in the bearing housing (30) during parallel movement, wherein the control gearing (4) is provided with a control element (41) which is fixed onto the vehicle by a bearing axis during parallel movement, as well as a scanning element (6) which pivots with the wiper arm (29), and wherein the bearing axis (2) lies parallel to and at a distance from the pivotal axis (7), and with a device for changing between parallel and pivoting movement of the wiper blade (16), which is provided with a servo motor (19) by means of which the control element (41) can be transferred, in the mid operating position, from the arrangement fixed to the vehicle to an arrangement fixed to the wiper arm, in which the control gearing (4) is put out of operation, the rotary drive (50) of the wiper blade (16) is arrested and the angular travel of the wiper arm (29) is altered, characterised in that the pivotal axis (7) of the wiper arm (29) is arranged on the control element (41) and that the bearing housing (30), during parallel movement of the wiper blade (16) is pivotable about the pivotal axis (7) arranged on the control element (41) and during transfer to the rest position is pivotable, together with the control element, about the bearing axis (2), whereby the distance of the jointed pin (35) from the bearing axis (2) is smaller than the distance of the jointed pin (35) from the pivotal axis (7).

2. Windscreen wiper arrangement according to claim 1, characterised in that the wiper arm (29) is provided with a first portion (27) which is connected to the bearing housing (30) and a second portion (28) which can be pushed telescopically inside the first portion (27) during parallel movement of the wiper blade (16), on which the rotary bearing for the wiper blade (63) is provided, and that the pushing of the second portion (28) is also controlled by the controlling gearing (4) which controls the rotary drive (50) of the wiper blade (16) and is locked into the arrangement of the control element (41) which is fixed to the wiper arm.

3. Windscreen wiper arrangement according to claim 1 or 2, with a locking apparatus (51) applied by the servo motor (19), which is provided with a catch pin (52) which can be pushed into an opening (53) in a component fixed to the vehicle or an opening (54) in the bearing housing (30), whereby the catch pin (52) is allocated to the control element (41), characterised in that the catch pin (52) is displaceable parallel to the bearing axis (2).

4. Windscreen wiper arrangement according to one of claims 1 to 3, characterised in that in the control element (41) a spring-applied control pin (40) is movably mounted and the scanning element (6) is formed by a control curve (42) formed in the bearing housing (30), which is on the control pin (40).

5. Windscreen wiper arrangement according to one of claims 2 to 4, characterised in that the parallel movement of the wiper blade (16) includes a cable pull (8) which on the one hand is connected to a rotary disk (17) which supports the wiper blade (16) and on the other hand is wound extendibly onto cable reels (9, 10) which are mounted on the control element (41) so that they can be rotated in opposite directions via a gear teeth system (14, 15).

6. Windscreen wiper arrangement according to claims 4 and 5, characterised in that the control pin (40) is provided with a gear teeth system (31) which engages with a gearing (11) which rotates in the opposite direction to the cable reels (9, 10).

7. Windscreen wiper arrangement according to claim 6, characterised in that the control pin (40) is provided with a longitudinal slot (43) which is provided with two rows of teeth (44, 45), whereby a pinion (46, 47) which drives one cable reel (9, 10) engages in each row of teeth (44, 45).

8. Windscreen wiper arrangement according to claim 7, characterised in that the cable reels (9, 10) are arranged coaxially on top of one another and the two rows of teeth (44, 45) are arranged at different heights in the longitudinal slot (43), whereby a pinion (46) is connected to the first cable reel (9) by means of a hollow shaft (48), in which the shaft (49) of the second cable reel (10) is arranged.

9. Windscreen wiper arrangement according to claim 6, characterised in that the cable reels (9, 10) are arranged, with gear teeth about their periphery, next to one another in the control element (41).

10. Windscreen wiper arrangement according to one of claims 5 to 9, characterised in that a coil spring (38) is allocated to the cable reels (9, 10) with respect to which the cable pull (8) is extendible.

11. Windscreen wiper arrangement according to claim 2, characterised in that the telescopically arranged portions (27, 28) are curved in the longitudinal direction.

12. Windscreen wiper arrangement according to claim 2 or 11, characterised in that the telescopically arranged portions (27, 28) are extendible in opposition to the force of a helical spring (37).

13. Windscreen wiper arrangement according to claims 10 and 12, characterised in that the spring force of the helical spring (37) is larger than that of the coil spring (38) against which it works.

14. Windscreen wiper arrangement according to claim 12, characterised in that the helical spring (37) is fixed to the portion (27) connected to the bearing housing (30), and to the end portion (28) of the wiper arm (29) housing the rotary disk (17), and is surrounded by a bellows (23).

15. Windscreen wiper arrangement according to claim 5, characterised in that the rotary disk (17) of the wiper blade (16) is provided with a gear teeth system (67), in which a drive worm (68) driven by the cable pull (8) engages, the stopping of which blocks the rotation of the wiper blade (16).

16. Windscreen wiper arrangement according to claim 15, characterised in that the drive worm (68) is connected to a cable drum (69) onto which the cable of the cable pull (8) is wound in the opposite direction.

17. Windscreen wiper arrangement according to one of claims 5 to 16, characterised in that the control element (41) and its cable reels (9, 10) and the rotary disk (17) have different diameters.

18. Windscreen wiper arrangement according to one of claims 5 to 17, characterised in that in the portion (27) of the wiper arm (29) attached to the bearing housing (30), a transverse axis (22) is provided on the side of the cable pull facing away from the wiper blade (16), on which the remaining portion of the wiper arm (29) is pivotably mounted.

19. Windscreen wiper arrangement according to one of claims 1 to 18, characterised in that a clip is provided which is to be mounted on the vehicle (1) in the region of the lower edge of the windscreen, with which clip the wiper arm (29) makes contact when it is pivoted to the rest position, whereby the wiper blade (16) is raised from the screen.

## Revendications

1. Système d'essuie-glace, en particulier pour voitures particulières, comprenant un bras d'essuie-glace (29) qui peut pivoter autour d'un axe de pivotement (7) et présente un boîtier de montage (30) et sur la partie terminale libre (28) un palier de pivotement (63) pour un balai d'essuie-glace (16) qui peut être guidé sensiblement parallèlement sur le parebrise (32) et est approximativement parallèle au bras d'essuie-glace (29) aussi bien dans une position de travail médiane que dans une position de repos pivotée dans la région du bord inférieur du pare-brise, comprenant un dispositif d'entraînement de pivotement (5) pour le bras d'essuie-glace (29) qui est solidaire du véhicule et agit à distance de l'axe de pivotement (7) sur un axe d'articulation (35) du boîtier de montage (30), comprenant un mécanisme de commande (4) disposé dans le boîtier de montage (30) et destiné au dispositif d'entraînement de pivotement (50) du balai d'essuie-glace (16) pendant le guidage parallèle, le mécanisme de commande (4) présentant un élément de commande (41) monté solidaire du véhicule sur un axe de montage (2) pendant le guidage parallèle ainsi qu'un élément de balayage (6) pivotant avec le bras d'essuie-glace (29), et l'axe de montage (2) s'étendant parallèlement à l'axe de pivotement (7), à distance de ce dernier et comprenant un dispositif pour alterner entre un guidage parallèle et un guidage pivotant du balai d'essuie-glace (16) qui présente un actionneur réglant (19) au moyen duquel l'élément de commande (41) dans la position de travail médiane peut être transféré de l'agencement solidaire du véhicule dans un agencement solidaire du bras d'essuie-glace dans lequel le mécanisme de commande (4) est mis hors service, le dispositif d'entraînement de pivotement (50) du balai d'essuie-glace (16) est arrêté et l'angle de pivotement du bras d'essuie-glace (29) est modifié, **caractérisé** par le fait que l'axe de pivotement (7) du bras d'essuie-glace (29) est disposé sur l'élément de commande (41) et que le boîtier de montage (30) peut pivoter pendant le guidage parallèle du balai d'essuie-glace (16) autour de l'axe de pivotement (7) dIsposé sur l'élément de commande (41) et autour de l'axe de montage (2) pendant le transfert dans la position de repos avec l'élément de commande (41), l'écartement de l'axe d'articulation (35) par rapport à l'axe de montage (2) étant inférieur à l'écartement de l'axe d'articulation (35) par rapport à l'axe de pivotement (7).

2. Système d'essuie-glace selon la revendication 1, **caractérisé** par le fait que le bras d'essuie-glace (29) présente une première partie (27) reliée au boîtier de montage (30) et une deuxième partie (28) qui peut être déplacée de manière télescopique dans la première partie (27) pendant le guidage parallèle du balai d'essuie-glace (16) et sur laquelle est prévu le palier de pivotement (63) pour le balai d'essuie-glace et que le déplacement de la deuxième partie (28) est également commandé par le mécanisme de commande (4) qui commande le dispositif d'entraînement de pivotement (50) du balai d'essuie-glace (16) et est bloqué lorsque l'élément de commande (41) est solidaire du bras d'essuie-glace.

3. Système d'essuie-glace selon la revendication 1 ou 2, comprenant un dispositif de verrouillage (51) qui est sollicité par l'actionneur réglant (19) et présente une broche d'arrêt (52) pouvant s'engager dans un orifice (53) d'un élément solidaire du véhicule ou dans un orifice (54) du boîtier de montage (30), la broche d'arrêt (52) étant associée à l'élément de commande (41), **caractérisé** par le fait que la broche d'arrêt (52) peut être déplacée parallèlement à l'axe de montage (2).

4. Système d'essuie-glace selon l'une des revendications 1 à 3, **caractérisé** par le fait qu'une broche de commande (40) sollicitée par ressort est montée mobile dans l'élément de commande (41) et l'élément de balayage (6) est réalisé par une came de commande (42) qui est réalisée dans le boîtier de commande (30) et prend appui contre la broche d'arrêt (40).

5. Système d'essuie-glace selon l'une des revendications 2 à 4, **caractérisé** par le fait que le guidage parallèle du balai d'essuie-glace (16) comprend une commande par câble (8) qui est d'une part reliée à un disque tournant (17) portant le balai d'essuie-glace (16) et est d'autre part enroulée avec possibilité d'étirement sur des bobines de câble (9, 10) qui sont montées rotatives en sens inverse sur l'élément de commande (41) par l'intermédiaire d'une denture (14, 15).

6. Système d'essuie-glace selon les revendications 4 et 5, **caractérisé** par le fait que la broche de commande (40) est munie d'une denture (31) qui s'engage dans un engrenage (11) faisant tourner les bobines de câbles (9, 10) en sens inverse.

7. Système d'essuie-glace selon la revendication 6, **caractérisé** par le fait que la broche de commande (40) présente une fente longitudinale (43) qui est munie de deux bordures dentées (44, 45), un pignon (46, 47) entraînant une bobine de câble (9, 10) s'engageant dans chaque bordure dentée (44, 45).

8. Système d'essuie-glace selon la revendication 7, **caractérisé** par le fait que les bobines de câble (9, 10) sont disposées coaxialement l'une au-dessus de l'autre et les deux bordures dentées (44, 45) sont disposées à différentes hauteurs dans la fente longitudinale (43), un pignon (46) étant relié à la première bobine de câble (9) au moyen d'un arbre creux (48) dans lequel est disposé l'arbre (49) de la deuxième bobine de câble (10).

9. Système d'essuie-glace selon la revendication 6, **caractérisé** par le fait que les bobines de câble (9, 10) présentent une denture périphérique et sont disposées l'une à côté de l'autre dans l'élément de commande (41).

10. Système d'essuie-glace selon l'une des revendications 5 à 9, **caractérisé** par le fait qu'il est associé aux bobines de câble (9, 10) un ressort spiral (38) contre lequel le câble de commande (8) peut être étiré.

11. Système d'essuie-glace selon la revendication 2, **caractérisé** par le fait que les parties (27, 28) disposées de manière télescopique sont courbées dans la direction longitudinale.

12. Système d'essuie glace selon la revendication 2 ou 11, **caractérisé** par le fait que les parties (27, 28) du bras d'essuie-glace (29) disposées de manière télescopique peuvent être rentrées contre la force d'un ressort (37).

13. Système d'essuie-glace selon les revendications 10 et 12, **caractérisé** par le fait que la force de ressort du ressort cylindrique (**37**) agissant à l'inverse du ressort spiral (38) est supérieure.

14. Système d'essuie-glace selon la revendication 12, **caractérisé** par le fait que le ressort cylindrique (37) est fixé sur la partie (27) faisant suite au boîtier de montage (30) et sur la partie terminale (28) du bras d'essuie-glace (29) portant le disque tournant (17) et est entouré par un soufflet (23).

15. Système d'essuie-glace selon la revendication 5, **caractérisé** par le fait que le disque tournant (17) du balai d'essuie-glace (16) présente une denture (67) dans laquelle s'engage une vis d'entraînement (68) entraînée par le câble de commande (8) et dont l'arrêt bloque le pivotement du balai d'essuie-glace (16).

16. Système d'essuie-glace selon la revendication 15, **caractérisé** par le fait que la vis d'entraînement (68) est reliée à un tambour de câble (69) sur lequel les câbles de la commande par câble (8) sont enroulés en sens inverse.

17. Système d'essuie-glace selon l'une des revendications 5 à 16, **caractérisé** par le fait que l'élément de commande (41) ou ses bobines de câble (9, 10) et le disque tournant (17) présentent des diamètres différents.

18. Système d'essuie-glace selon l'une des revendications 5 à 17, **caractérisé** par le fait que dans la partie (27) du bras d'essuie-glace (29) qui fait suite au boîtier de montage (30), il est prévu un axe transversal (22) sur le côté de la commande par câble (8) éloigné du balai d'essuie-glace (16), axe sur lequel la partie restante du bras d'essuie-glace (29) est montée pivotante.

19. Système d'essuie-glace selon l'une des revendications 1 à 18, **caractérisé** par le fait qu'il est prévu un étrier (24) à monter sur le véhicule (1) dans la région du bord inférieur de pare-brise et sur lequel le bras d'essuie-glace (29) se pose lors de son pivotement dans la position de repos, le balai d'essuie-glace (16) se soulevant du pare-brise (32).
